# EUROPÄISCHE PATENTSCHRIFT

(11) **EP 0 499 041 B1**
(45) Veröffentlichungstag und Bekanntmachung des Hinweises auf die Patenterteilung: **07.12.1994**
(21) Anmeldenummer: 92100654.0
(22) Anmeldetag: 16.01.1992
(51) Int. Cl.: A23C 19/08, A01J 27/04

(54) **Verfahren und Vorrichtung zur Herstellung pumpfähiger Nahrungsmittel, insbesondere von Schmelzkäse**
Process and apparatus for preparing pumpable foodstuff, especially for processed cheese
Procédé et dispositif de préparation d'aliment pompable, en particulier de fromage fondu

(30) Priorität: 15.02.1991 DE 4104686
(43) Veröffentlichungstag der Anmeldung: 19.08.1992
(73) Patentinhaber: A. STEPHAN U. SÖHNE GMBH & CO., D-31789 Hameln (DE)
(72) Erfinder: Otto, Friedrich, W-3250 Hameln (DE); Dubielzyk, Albert, W-3253 Hessisch Oldendorf 2 (DE)
(74) Vertreter: Gramm, Werner, Prof., Dipl.-Ing.

(56) Entgegenhaltungen:
- CH-A- 339 038
- FR-A- 2 255 018
- US-A- 4 112 131
- W. BERGER, H. KLOSTERMEYER 'Die Schmelzkäseherstellung' 1989 , BENCKISER-KNAPSACK GMBH , LADENBURG, DEUTSCHLAND

## Beschreibung

Die Erfindung betrifft ein Verfahren zur Herstellung von Schmelzkäse, bei dem Rohkäse vorzerkleinert und mit weiteren Rezepturbestandteilen zu einer standardisierten Käsemasse vermischt wird, in die zu ihrer Aufheizung Wasserdampf in Trinkwasserqualität injiziert wird, worauf die Käsemasse kontinuierlich durch eine Mischzone geleitet, anschließend gekühlt und dann einer weiteren Be- oder Verarbeitung zugeführt wird.

Die Erfindung betrifft ferner eine Vorrichtung zur Herstellung pumpfähiger Nahrungsmittel, insbesondere von Schmelzkäse, mit einer Aufbereitungsvorrichtung für den Rohkäse, einem Mischer, einer Einrichtung zur Erhitzung und zur nachfolgenden Abkühlung der Käsemasse und mit Förderpumpen für die Käsemasse.

Pumpfähige Nahrungsmittel umfassen flüssige und viskose Nahrungsmittel wie zum Beispiel Milch- und Schmelzkäseprodukte, Suppen, Soßen, Mayonaisen und Babynahrung. Nur aus Gründen der Vereinfachung wird im Schutzbegehren und in der Beschreibung jeweils nur Bezug genommen auf die Herstellung von Schmelzkäse.

Das vorstehend beschriebene Verfahren sowie die ebenfalls vorstehend beschriebene Vorrichtung lassen sich der US-PS 4,112,131 entnehmen. Bei diesem Stand der Technik wird in bestimmten Vorrichtungen eine vorzerkleinerte standardisierte Käsemasse-Mischung hergestellt und über eine Pumpe in eine Dampfeinblasvorrichtung gepumpt. Hier wird in die kontinuierlich durchlaufende Käsemasse direkt Wasserdampf eingeblasen, der einen Dampfdruck von 3,5 bis 15 kg/cm² und somit als gesättigter Wasserdampf eine Temperatur von 139° C bis 194° C aufweist und die Käsemasse auf eine Temperatur zwischen 75° C und 150° C aufheizt. Unter Einwirkung der hohen Geschwindigkeit der Dampfstrahlen soll die Käsemasse in Turbulenzen versetzt und mit dem Dampf vermischt werden. Dieser Dampfeinblaseinrichtung ist ein statischer Mischer nachgeschaltet, der zur Mischung und Emulgierung der Käsemasse dient. Die Schmelzkäsemasse wird schließlich unter Vakuum gekühlt, wobei überschüssiger Wasseranteil abgeführt wird. Die Abkühlung erfolgt auf 66° C bis 99° C. Dabei kann der Kühltank mit einer nicht näher dargestellten Austrageinrichtung zum Austrag der geschmolzenen Käsemasse versehen sein. Die aus dem Kühler ausgetragene Schmelzkäsemasse wird dann zur Verpackung oder aber zu einer Formstation weiter gefördert.

Mit diesem Verfahren bzw. dieser vorbekannten Anlage lassen sich nur eine unzureichende Homogenisierung und Emulgierung erzielen; Eiweiß-, Fett- und Wassermoleküle gehen keine innige und homogene Verbindung ein. Zwar wird in der Vorveröffentlichung darauf hingewiesen, daß die hohe Geschwindigkeit des eingeblasenen Dampfes zu einer erhöhten Turbulenz sowie zu einer Mischung des Dampfes mit der Käsemasse-Mischung führt. Jedoch hat sich in der Praxis gezeigt, daß durch bloßes Einblasen von Dampf keine ausreichenden Turbulenzen erzeugt werden können.

Bei Schmelzkäse mit einer Temperatur von ca. 140° C ist das Eiweiß denaturiert und liegt nicht mehr in einer verbindungsfähigen Form vor; es ist nicht mehr ausreichend stabil, so daß keine Viskosität aufgebaut werden kann.

Bei dem vorbekannten Verfahren bleibt die Käsemasse auch nach ihrer Abkühlung auf unter 100° C in einem flüssigen Zustand, der auch dann beibehalten wird, wenn eine Abkühlung auf Raumtemperatur erfolgt. Entgegen den Angaben in der Vorveröffentlichung kann somit die bei 69° C aus dem Kühltank abgeförderte Schmelzkäsemasse noch nicht verpackungsfähig sein.

Ausgehend von dem eingangs beschriebenen Verfahren wird die Aufgabe erfindungsgemäß durch folgende Merkmale gelöst:
a) die Aufheizung der Käsemasse erfolgt auf maximal 140° C;
b) die einströmende Dampfmenge wird so bemessen, daß entsprechend der durch die Mischzone strömenden Käsemasse das Kondensat seine Energie zu zumindest angenähert 100 % an die Käsemasse abgibt;
c) in der Mischzone wird die Käsemasse durch hochtourig umlaufende Werkzeuge in hohe Turbulenzen versetzt;
d) der Mischzone ist eine Emulgierzone nachgeschaltet, in der die aus der Mischzone austretende Käsemasse durch hochtourig umlaufende Werkzeuge emulgiert und partiell gemischt wird;
e) die Kühlung der Schmelzkäsemasse erfolgt unter Vakuum in einer Entspannungs- und Cremierzone, in der die Schmelzkäsemasse durch langsam umlaufende Werkzeuge cremiert wird.

Ausgehend von der eingangs beschriebenen Vorrichtung wird die genannte Aufgabe erfindungsgemäß durch folgende Merkmale gelöst:
a) eine Mischkammer (8),
   a₁) in die Mischkammer ragt eine Misch- und Förderwelle (6), die mit Drehzahlen zwischen 1000 und 4000 U/min antreibbar ist;
   a₂) angenähert axial fluchtend mit der Welle (6) ist im Mischkammergehäuse ein Einlauf (3) für das Rohkäsegemisch vorgesehen;
   a₃) angenähert senkrecht zur Welle (6) münden in die bzw. vor der Mischkammer (8) Dampfdüsen (10) o. dergl. aus;
b) eine Emulgierkammer (13);
   b₁) sie setzt den Innenraum der Mischkammer (8) auf seinem dem Rohkäsegemisch-Einlauf (3) gegenüberliegenden Ende fort;
   b₂) sie umschließt einen Homogenisier- und Emulgierwerkzeugsatz (11, 12);
   b₃) dieser Werkzeugsatz besteht aus einem im Emulgierkammer-Gehäuse ortsfest angeordneten Stator (12) und einem von diesem konzentrisch berührungsfrei umschlossenen Rotor (11), der der Misch- und Förderwelle (6) axial nachgeordnet ist und zusammen mit dieser umläuft;
   b₄) Stator (12) und Rotor (11) weisen axial gerichtete, zwischen sich Axialschlitze (15) bildende Zähne (16) auf;
   b₅) ein aus der Emulgierkammer (13) herausführendes Schmelzkäse-Auslaßrohr (14) ist dem Werkzeugsatz (11, 12) in radialer Richtung nachgeschaltet.

Derartige kontinuierlich arbeitende Verfahren bzw. Vorrichtungen lassen sich mit Hilfe der heute zur Verfügung stehenden Regel- und Steuerungstechnik, insbesondere unter Einschaltung frei programmierbarer Steuerungen und dergl. in einfacher Weise betreiben, ohne daß hierfür permanent speziell angelernte Fachleute eingesetzt werden müssen.

Dem erfindungsgemäßen kontinuierlichen Verfahren ist ein diskontinuierlicher Aufbereitungsprozeß vorgeschaltet. Bei der Herstellung von Schmelzkäse wird das Rohmaterial in einem Käsewolf zerkleinert und in einem Mischsystem unter Hinzugabe aller Rezepturbestandteile homogen miteinander vermischt. Dieses thermisch noch nicht behandelte Gemenge liegt in einer Partikelgröße von 1 bis 4 mm vor. Dabei werden Mischer bevorzugt, die pro Batch bis zu 5 t mischen können. Aus einem derartigen Batch werden nach der Vorzerkleinerung und dem genannten Mischprozeß jeweils Proben für die Analyse entnommen, um den Fett- und Wassergehalt exakt einzustellen, was von hohem wirtschaftlichen Nutzen ist und den Vorschriften der Käseverordnung entspricht.

Durch die erfindungsgemäß vorgesehenen hohen Turbulenzen, in die die unmittelbar zuvor mit Heißdampf beaufschlagte Käsemasse versetzt wird, wird innerhalb weniger Sekunden die Dampfenergie auf die Käsemasse übertragen und diese auf z. B. 95° C aufgeheizt. Durch die sich unmittelbar anschließende Emulgierung, die wiederum mit hochtourig umlaufenden Werkzeugen erfolgt, erhält man einen Schmelzkäse, der hinsichtlich Aussehen, Glanz, Streichfähigkeit und Textur der Käsemasse höchsten Anforderungen entspricht.

Weitere Merkmale der Erfindung sind Gegenstand der Unteransprüche und werden in Verbindung mit weiteren Vorteilen der Erfindung anhand eines Ausführungsbeispieles näher erläutert.

In der Zeichnung ist eine als Beispiel dienende Ausgestaltung der Erfindung dargestellt. Es zeigen:
- Fig. 1: ein Verfahrensschema zur Herstellung von Schmelzkäse;
- Fig. 2: in vergrößertem Maßstab die in Fig. 1 dargestellte und dieser Darstellung gegenüber um 180° gedrehte Misch- und Schmelzeinrichtung in Seitenansicht z. T. im Längsschnitt;
- Fig. 3: in gegenüber Fig. 2 vergrößertem Maßstab den rechten Teil der Fig. 2 im Längsschnitt;
- Fig. 4: in gegenüber Fig. 3 vergrößertem Maßstab in Draufsicht und z. T. im Querschnitt einen Stator der genannten Misch- und Schmelzeinrichtung;
- Fig. 5: das in Fig. 4 geschnitten dargestellte Detail in vergrößertem Maßstab und
- Fig. 6: einen Schnitt gemäß der Linie VI-VI in Fig. 4.

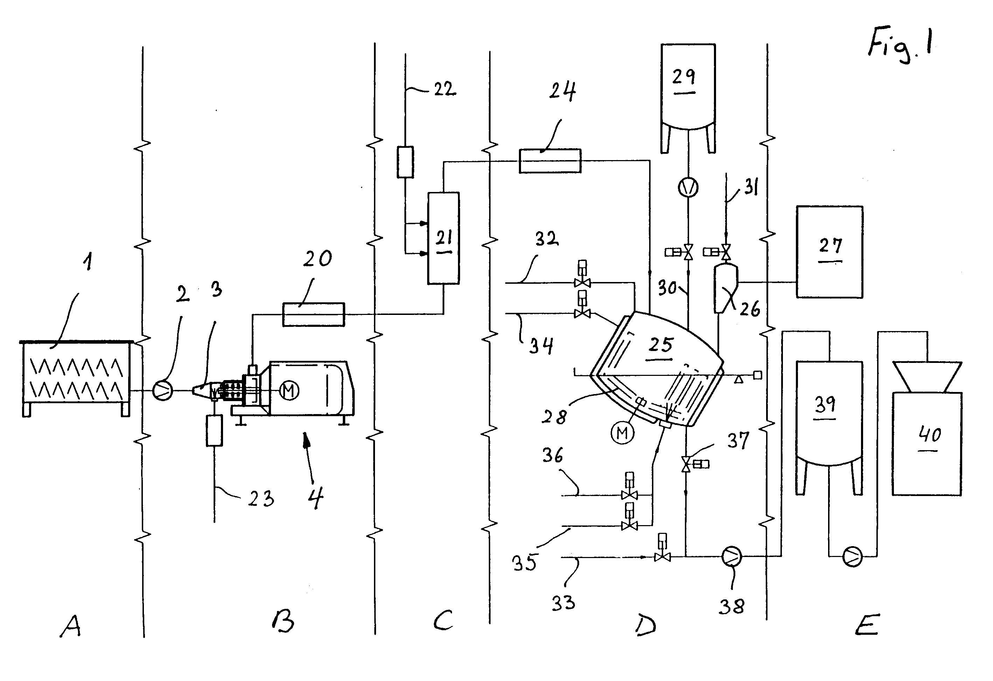

Fig. 1 ist unterteilt in verschiedene Aufbereitungsbereiche und zwar in einen Mischbereich A, einen Misch- und Schmelzbereich B, eine Hocherhitzungszone C, eine Entspannungs- und Cremierzone D sowie einen Abfüllbereich E.

Der Rohkäse wird in großen Stücken in speziellen Käsewölfen auf eine Feinheit zwischen 1 und 4 mm gewolft und dann mit bekannten Fördermitteln in einen Mischer 1 gegeben, der in Fig. 1 im Mischbereich A schematisch dargestellt ist und z. B. ein offener Doppelschneckenmischer sein kann, der zur Aufnahme von Produkten bis 5000 kg geeignet ist. Hier wird der gewolfte Rohkäse mit weiteren Rezepturbestandteilen innig und homogen vermischt bei einer üblicherweise zwischen 15 und 30° C liegenden Mischtemperatur. Die Käsemischung wird analysiert. Fett- und Wassergehalt bzw. ph-Wert werden je nach Bedarf eingestellt.

Aus dem Mischer 1 wird die aufbereitete, standadisierte Käsemasse von einer Molkereipumpe 2 in den Einlauf 3 einer kontinuierlich arbeitenden Misch- und Schmelzvorrichtung 4 gepumpt, wobei der Pumpenantrieb mit frequenzgesteuertem Motor zur Regelung des Förderstromes erfolgen kann.

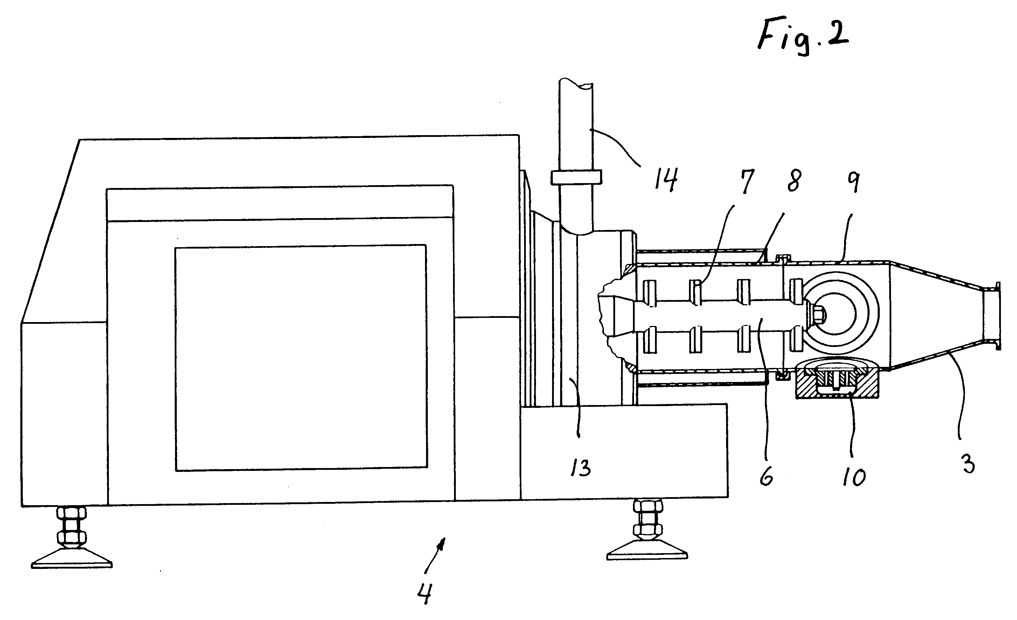

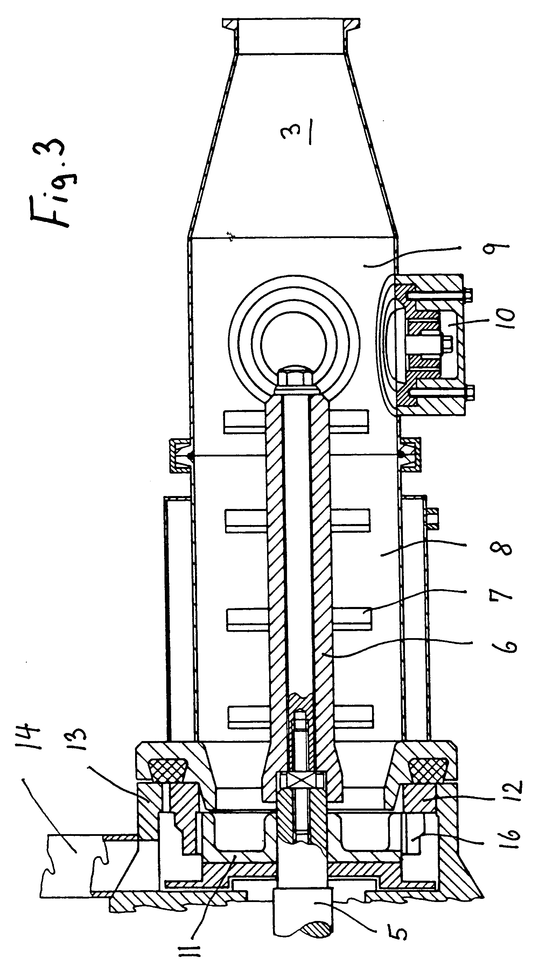

Die Figuren 2 und 3 lassen den Aufbau der genannten Misch- und Schmelzvorrichtung 4 erkennen. Der Antrieb erfolgt über einen nicht näher dargestellten handelsüblichen Motor, dessen Motorwelle 5 eine Misch- und Förderwelle 6 trägt, die mit radial gerichteten Mischwerkzeugen 7 bestückt ist, die aufgrund eines entsprechenden Anstellwinkels dem Mischgut eine axiale Förderkomponente in Richtung des Motors verleihen. Die Misch- und Förderwelle 6 läuft innerhalb einer Mischkammer 8 um, die - entgegen der Produktförderrichtung gesehen - über eine Dampfeinblaszone 9 in den genannten Einlauf 3 übergeht. Die Einbringung des Dampfes kann über den Umfang der die Dampfeinblaszone 9 bildenden Kammerwandung durch Dampfinjektoren, Dampfring, Dampfrückschlagventile 10 o. dergl. erfolgen.

Auf der mit Drehzahlen zwischen 1000 und 4000 U/min umlaufenden Motorwelle 5 sitzt drehfest ein Rotor 11 (siehe Fig. 3), der - in Produktförderrichtung gesehen - der Misch- und Förderwelle 6 nachgeschaltet ist und innerhalb eines feststehenden Stators 12 umläuft. Der aus dem Rotor 11 und dem Stator 12 bestehende Emulgiersatz ist in einer Emulgierkammer 13 angeordnet, deren Gehäuse unmittelbar an den Motor angeflanscht ist, und die ein aus ihr herausführendes Schmelzkäseauslaßrohr 14 aufweist, das dem Emulgiersatz 11, 12 in radialer Richtung nachgeschaltet ist.

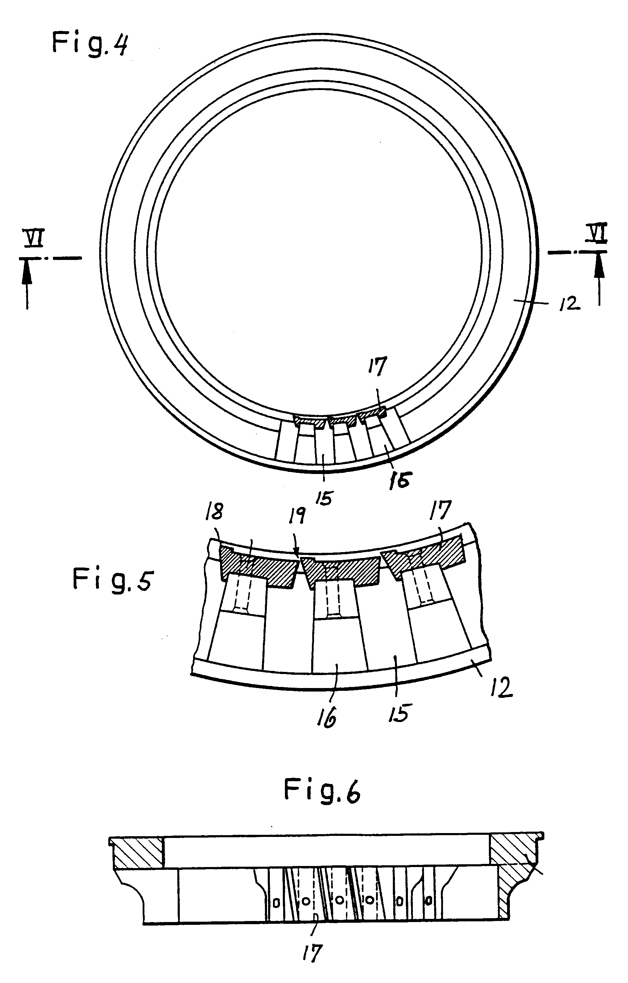

Gemäß den Figuren 4 bis 6 weist der Stator 12 axial gerichtete, zwischen sich Axialschlitze 15 bildende Zähne 16 auf, auf denen plattenförmig ausgebildete Schneidprofile 17 befestigt sind. Die eine der beiden Axialkanten des Schneidprofils 17 ist als Schneidkante 18 ausgebildet, während die andere Axialkante zusammen mit der Schneidkante des folgenden Schneidprofils 17 eine Schneidlücke 19 bildet. Im übrigen kann der Emulgiersatz gemäß der in EP-B1 0 005 726 dargestellten Form ausgebildet sein.

Der über die Dampfrückschlagventile 10 eingeblasene Dampf weist Trinkwasserqualität sowie eine Temperatur von vorzugsweise 140° C auf. Grundsätzlich könnte der injizierte Dampf aber auch eine Temperatur von 170° C aufweisen, was dann einen entsprechend höheren apparativen Aufwand erfordern würde. Die Dampfinjizierung erfolgt vorzugsweise unmittelbar bevor die eingepumpte Rohkäsemasse von den hochtourig umlaufenden Mischwerkzeugen 7 erfaßt und in hohe Turbulenzen versetzt wird. Der Wasserdampf kann dadurch seine Energie durch Kondensation des Wasserdampfes an die Käsemasse abgeben, die dadurch in Sekundenschnelle auf die gewünschte Temperatur von vorzugsweise 95° C aufgeheizt wird. Die erfindungsgemäß hohen Turbulenzen sind erforderlich, um die Dampfenergie in kürzester Zeit auf die Käsemasse zu übertragen. Der Dampfdruck kann dabei bis zu 8,0 bar betragen, wobei die einströmende Dampfmenge so bemessen wird, daß entsprechend der durchströmenden Käsemasse das Kondensat zu zumindest angenähert 100 % seine Energie abgibt, so daß durch das gesamte System kein freier Dampf austritt.

Bei dem kontinuierlich arbeitenden Aggregat können je nach Stundenleistung, Rezeptur und Qualitätsanspruch, Drehzahl, Misch- und Förderwelle 6 und Rotor-Stator-System 11, 12 variiert werden, um unterschiedlich starke Turbulenzen und Homogenisierwirkungen zu erzielen. Dabei kann das Rotor-Stator-System je nach Homogenisierintensität Homogenisierungs-Spaltlücken zwischen 0,05 und 10 mm, vorzugsweise zwischen 0,1 bis 3 mm aufweisen. Hierdurch werden - ebenso wie durch die Drehzahlveränderung - die Scherkräfte variiert. Alle diese Veränderungsmöglichkeiten haben einen wesentlichen Einfluß auf die Emulsion, den Dispersionseffekt und somit auch unmittelbar auf das Aussehen, den Glanz, die Streichfähigkeit und die Textur der Käsemasse. Mit dieser erfindungsgemäßen Technologie können alle beim Schmelzprozeß einwirkenden physikalischen, thermischen und chemischen Faktoren optimal aufeinander abgestimmt werden, so daß sich beste Endproduktergebnisse erzielen lassen. Der kontinuierlich verlaufende Heiz- und Emulgierprozeß läßt sich durch übliche Regeleinrichtungen so steuern, daß eine absolut gleichmäßige Qualität erreicht wird.

Gemäß Fig. 1 ist der Aufbereitung der Käsemasse eine dem Schmelzkäse-Auslaßrohr 14 nachgeschaltete Temperaturhalte- und Reaktionsstrecke 20 nachgeschaltet, die abhängig vom Produkt und der Produkttemperatur die Wahl einer Temperaturhaltezeit von 4 bis 180 sek. ermöglicht, z. B. für streichfähige Schmelzkäseprodukte aber auch für Block- und Scheibenkäse.

Dieser Temperaturhalte- und Reaktionsstrecke 20 schließt sich gemäß Fig. 1 ein Hocherhitzungsaggregat 21 an, wo die Schmelzkäsemasse von z. B. 95° C auf 140° C erhitzt wird, um die Haltbarkeit des Käses wesentlich zu verlängern. Der Prozeß erfolgt im Überdruckbereich durch Injizierung von Dampf über eine Dampfleitung 22 ähnlich der an die Dampfrückschlagventile 10 der Misch- und Schmelzvorrichtung 4 angeschlossenen Dampfleitung 23.

Der Hocherhitzungszone C schließt sich gemäß Fig. 1 die Entspannungs- und Cremierzone D an. Nach dem Durchlaufen einer weiteren Heißhaltestrecke 24 gelangt die nunmehr bereits Schmelzkäse genannte Käsemasse in einen vakuumdichten Entspannungs- und Cremierbehälter 25, an den eine Vakuumanlage 26 sowie ein Kondensator 27 zum Niederschlagen des aus dem Behälter 25 abgesaugten Brüden angeschlossen sind. In dem Entspannungs- und Cremierbehälter 25 wird durch eine definierte Vakuumhöhe die Schmelzkäsetemperatur, die zwischen 95 und 140° C betragen kann, sekundenschnell auf eine gewünschte Produkt- bzw. Cremiertemperatur von 80° C abgesenkt. Durch Regelung werden Vakuumhöhe und Produkttemperatur konstant gehalten. In dem Behälter 25 sind drehbare Misch- und Cremierwerkzeuge 28 vorgesehen, die mit Umdrehungszahlen zwischen 5 und 50 U/min antreibbar sind. Durch diese Werkzeuge wird die Cremierung des Schmelzkäses verbessert. Außerdem können damit auch noch neu zuzugebende Produkte in die Schmelzkäsemasse eingemischt werden. In Fig. 1 sind hierfür ein Zutatenbehälter 29 sowie eine mit Pumpe und Absperrventil bestückte Zufuhrleitung 30 angedeutet, die in eine Einsaugöffnung des Behälters 25 mündet.

Der Entspannungs- und Cremierbehälter 25 ist auf Wiegezellen gelagert, über die die Mengen der Vorschmelze sowie der Füllstand der Behälter während der Produktion ständig überwacht und exakt bestimmt werden können. So kann z. B. der Füllstand, der einem bestimmten Gewicht entspricht, auf einem Display am Schaltschrank visuell angezeigt werden.

Um eine Reinigung des Entspannungs- und Cremierbehälters 25 sowie des Vakuumtopfes der Vakuumanlage 26 kontinuierlich während des Verfahrens vornehmen zu können, sind an den genannten Behälter 25 drei Reinigungsleitungen 31, 32, 33 angeschlossen, die jeweils mit Absperrventilen bestückt sind. Der Entspannungs- und Cremierbehälter 25 entspricht dabei hinsichtlich seines Gehäuses und seiner Einbauten höchsten hygienischen und aseptischen Anforderungen. Das heißt u. a., daß Toträume, in denen sich Rückstände ablagern können, vermieden sind. Schlitzschrauben, die mit dem Produkt in Berührung kommen könnten, dürfen keine Verwendung finden. Die Spalten aller Wellendurchführungen werden direkt gereinigt.

Gemaß Fig. 1 sind an den Entspannungs- und Cremierbehälter 25 noch Wasserleitungen 34, 35 und eine Dampfleitung 36 angeschlossen. Der Behälter 25 weist ferner ein Bodensitzventil 37 auf zum kontinuierlichen Abpumpen des fertig produzierten und nachcremierten Schmelzkäses. Die Förderung des fertig produzierten und nachcremierten Schmelzkäses erfolgt kontinuierlich mittels z. B. einer Zahnradpumpe 38 in einen Pufferbehälter 39 und von dort in eine Abfüllmaschine 40.

## Patentansprüche

1. Verfahren zur Herstellung von Schmelzkäse, bei dem Rohkäse vorzerkleinert und mit weiteren Rezepturbestandteilen zu einer standardisierten Käsemasse vermischt wird, in die zu ihrer Aufheizung Wasserdampf in Trinkwasserqualität injiziert wird, worauf die Käsemasse kontinuierlich durch eine Mischzone geleitet, anschließend gekühlt und dann einer weiteren Be- oder Verarbeitung zugeführt wird, **gekennzeichnet durch** folgende Merkmale:
a) Die Aufheizung der Käsemasse erfolgt auf maximal 140° C;
b) die einströmende Dampfmenge wird so bemessen, daß entsprechend der durch die Mischzone strömenden Käsemasse das Kondensat seine Energie zu zumindest angenähert 100 % an die Käsemasse abgibt;
c) in der Mischzone wird die Käsemasse durch hochtourig umlaufende Werkzeuge in hohe Turbulenzen versetzt;
d) der Mischzone ist eine Emulgierzone nachgeschaltet, in der die aus der Mischzone austretende Käsemasse durch hochtourig umlaufende Werkzeuge emulgiert und partiell gemischt wird;
e) die Kühlung der Schmelzkäsemasse erfolgt unter Vakuum in einer Entspannungs- und Cremierzone, in der die Schmelzkäsemasse durch langsam umlaufende Werkzeuge cremiert wird.

2. Verfahren nach Anspruch 1, **dadurch gekennzeichnet**, daß der Aufbereitung der Käsemasse eine Temperaturhalte- und Reaktionsstrecke (20) nachgeschaltet ist.

3. Verfahren nach Anspruch 1 oder 2, **dadurch gekennzeichnet**, daß in einer der Emulgierzone (B) nachgeschalteten Hocherhitzungszone (C) in den fließfähigen Schmelzkäse Dampf in Trinkwasserqualität im Überdruckbereich injiziert und die Schmelzkäsemasse auf bis zu 150° C erhitzt wird.

4. Verfahren nach Anspruch 3, **dadurch gekennzeichnet**, daß die Erhitzung bei einem Dampfdruck von bis zu 8 bar erfolgt.

5. Verfahren nach Anspruch 3 oder 4, **gekennzeichnet durch** turbulenzfördernde Maßnahmen in der Hocherhitzungszone (C).

6. Verfahren nach Anspruch 3, 4 oder 5, **gekennzeichnet durch** eine der Hocherhitzungszone nachgeschaltete Heißhaltestrecke (24).

7. Verfahren nach einem der vorigen Ansprüche, **dadurch gekennzeichnet,** daß in der Entspannungs- und Cremierzone (D) durch eine definierte, durch Regelung konstant gehaltene Vakuumhöhe die Schmelzkäsetemperatur sekundenschnell auf eine Produkt- bzw. Cremiertemperatur von ca. 80° C abgesenkt wird.

8. Verfahren nach einem der Ansprüche 3 bis 7, **dadurch gekennzeichnet,** daß in der Entspannungs- und Cremierzone (D) das Vakuum in seiner Höhe so bemessen wird, daß nahezu diejenige Menge Wasser verdampft, die zuvor in der Hocherhitzungszone als Dampf zugeführt wurde.

9. Verfahren nach Anspruch 8, **dadurch gekennzeichnet**, daß der Brüden über die Vakuumanlage abgesaugt und kondensiert wird.

10. Verfahren nach einem der vorhergehenden Ansprüche, **dadurch gekennzeichnet**, daß vor und/oder während der Cremierung sterilisierte Zusatzstoffe eingesaugt oder -gepumpt und dann in die Schmelzkäsemasse eingemischt werden.

11. Vorrichtung zur Herstellung pumpfähiger Nahrungsmittel, insbesondere von Schmelzkäse, insbesondere zur Durchführung des Verfahrens nach einem der vorhergehenden Ansprüche, mit einer Aufbereitungsvorrichtung für den Rohkäse, einem Mischer (1), einer Einrichtung zur Erhitzung und zur nachfolgenden Abkühlung der Käsemasse und mit Förderpumpen (2,38) für die Käsemasse, **gekennzeichnet durch** eine im Durchlaufverfahren arbeitende Misch- und Schmelzeinrichtung (4) mit folgenden Merkmalen:
a) eine Mischkammer (8),
a₁) in die Mischkammer ragt eine Misch- und Förderwelle (6), die mit Drehzahlen zwischen 1000 und 4000 U/min antreibbar ist;
a₂) angenähert axial fluchtend mit der Welle (6) ist im Mischkammergehäuse ein Einlauf (3) für das Rohkäsegemisch vorgesehen;
a₃) angenähert senkrecht zur Welle (6) münden in die bzw. vor der Mischkammer (8) Dampfdüsen (10) o. dergl. aus;
b) eine Emulgierkammer (13);
b₁) sie setzt den Innenraum der Mischkammer (8) auf seinem dem Rohkäsegemisch-Einlauf (3) gegenüberliegenden Ende fort;
b₂) sie umschließt einen Homogenisier- und Emulgierwerkzeugsatz (11,12);
b₃) dieser Werkzeugsatz besteht aus einem im Emulgierkammer-Gehäuse ortsfest angeordneten Stator (12) und einem von diesem konzentrisch berührungsfrei umschlossenen Rotor (11), der der Misch- und Förderwelle (6) axial nachgeordnet ist und zusammen mit dieser umläuft;
b₄) Stator (12) und Rotor (11) weisen axial gerichtete, zwischen sich Axialschlitze (15) bildende Zähne (16) auf;
b₅) ein aus der Emulgierkammer (13) herausführendes Schmelzkäse-Auslaßrohr (14) ist dem Werkzeugsatz (11,12) in radialer Richtung nachgeschaltet.

12. Vorrichtung nach Anspruch 11, **dadurch gekennzeichnet**, daß Misch- und Förderwelle (6) sowie der Rotor (12) direkt auf der Motorwelle (5) eines Elektromotors befestigt sind, an dem das die Emulgier- und Mischkammer (13,8) umschließende Gehäuse angeflanscht ist.

13. Vorrichtung nach Anspruch 11 oder 12, **dadurch gekennzeichnet**, daß die Spaltlücken (19) zwischen den axial gerichteten Zähnen (16) des Stators (12) zwischen 0,05 und 10 mm wählbar sind.

14. Vorrichtung nach Anspruch 11, 12 oder 13, **dadurch gekennzeichnet**, daß die Motordrehzahl veränderbar ist.

15. Vorrichtung nach einem der Ansprüche 11 bis 14, **dadurch gekennzeichnet**, daß das Schmelzkäse-Auslaßrohr (14) der Misch- und Schmelzvorrichtung (4) ggf. nach Passieren einer Hocherhitzungszone (C) in einen vakuumdichten Entspannungs- und Cremierbehälter (25) führt, an den eine Vakuumanlage (26) sowie ein Kondensator (27) zum Niederschlagen des aus dem Behälter abgesaugten Brüden angeschlossen sind, wobei in dem Behälter (25) drehbare Misch- und Cremierwerkzeuge (28) vorgesehen sind, die mit Umdrehungszahlen zwischen 5 und 50 U/min antreibbar sind.

16. Vorrichtung nach Anspruch 15, **dadurch gekennzeichnet**, daß der Entspannungs- und Cremierbehälter (25) eine Einsaugöffnung für einzumischende Zusatzstoffe aufweist.

17. Vorrichtung nach Anspruch 15 oder 16, **dadurch gekennzeichnet**, daß der Entspannungs- und Cremierbehälter (25) auf Wiegezellen gelagert ist.

18. Vorrichtung nach Anspruch 15, 16 oder 17, **dadurch gekennzeichnet**, daß der Entspannungs- und Cremierbehälter (25) ein Bodensitzventil (37) zum kontinuierlichen Abpumpen des fertig produzierten und nachcremierten Schmelzkäses aufweist.

19. Vorrichtung nach einem der Ansprüche 15 bis 18, **dadurch gekennzeichnet**, daß der Entspannungs- und Cremierbehälter (25) hinsichtlich seines Gehäuses und seiner Einbauten höchsten hygienischen und aseptischen Anforderungen entspricht.

## Claims

1. Process for the production of processed cheese wherein raw cheese is precomminuted and is mixed with further recipe ingredients to form a standardised cheese material into which steam of drinking water quality is injected to heat it up, whereupon the cheese material is passed continuously through a mixing zone, cooled and then delivered for further treatment or processing, characterised by the following features:
a) the heating up of the cheese material takes place to at most 140°C;
b) the amount of inflowing steam is regulated such that corresponding to the cheese material flowing through the mixing zone the condensate gives up at least almost 100% of its energy to the cheese material;
c) in the mixing zone the cheese material is made highly turbulent by high-speed rotating tools;
d) the mixing zone is followed by an emulsification zone in which the cheese material leaving the mixing zone is emulsified and partly mixed by high-speed rotating tools;
e) the cooling of the processed cheese material takes place under vacuum in a relaxation and creaming zone in which the processed cheese material is creamed by slowly rotating tools.

2. Process according to claim 1, characterised in that a temperature holding and reaction section (20) follows the processing of the cheese material.

3. Process according to claim 1 or claim 2, characterised in that in a flash pasteurisation zone (C) following the emulsification zone (B) steam of drinking water quality in the superatmospheric pressure region is injected into the flowable processed cheese and the processed cheese material is heated to up to 150°C.

4. Process according to claim 3, characterised in that the heating takes place at a steam pressure of up to 8 bar.

5. Process according to claim 3 or claim 4, characterised by turbulence-promoting measures in the flash pasteurisation zone (C).

6. Process according to claim 3, claim 4 or claim 5, characterised by a hot holding section (24) following the flash pasteurisation zone.

7. Process according to any one of the preceding claims, characterised in that in the relaxation and creaming zone (D) the temperature of the processed cheese material is lowered in a matter of seconds to a product or creaming temperature of about 80°C by a defined level of vacuum, kept constant by a control unit.

8. Process according to any one of claims 3 to 7, characterised in that in the relaxation and creaming zone (D) the vacuum level is regulated such that almost the same amount of water evaporates as was previously supplied in the flash pasteurisation zone as steam.

9. Process according to claim 8, characterised in that the exhaust vapours are sucked off by means of the vacuum system and condensed.

10. Process according to any one of the preceding claims, characterised in that before and/or during the creaming sterilised ingredients are sucked or pumped in and then mixed into the processed cheese material.

11. Apparatus for the production of pumpable foodstuffs, in particular processed cheese, particularly for carrying out the process according to any one of the preceding claims, comprising a processing apparatus for the raw cheese, a mixer (1), apparatus for heating up and subsequently cooling the cheese material and pumps (2, 38) for conveying the cheese material, characterised by a continuously operating mixing and melting apparatus (4) having the following features:
a) a mixing chamber (8),
a₁) projecting into the mixing chamber, a mixing and conveying shaft (6) which can be driven at speeds between 1000 and 4000 rpm;
a₂) an inlet (3) for the raw cheese mixture provided in the housing of the mixing chamber, aligned substantially axially with the shaft (6);
a₃) steam nozzles (10) or the like opening into or before the mixing chamber (8) substantially at right angles to the shaft (6);
b) an emulsification chamber (13);
b₁) forming a continuation of the interior of the mixing chamber (8) at its end opposite the raw cheese mixture inlet (3);
b₂) surrounding a set of homogenising and emulsifying tools (11, 12);
b₃) said set of tools comprising a stationary stator (12) fitted in the housing of the emulsification chamber and a rotor (11), surrounded concentrically by but out of contact with said stator, and arranged axially downstream of the mixing and conveying shaft (6) and rotating together therewith;
b₄) stator (12) and rotor (11) having axially directed teeth (16) defining axial slits (15) between them;
b₅) a processed cheese outlet pipe (14) leading out of the emulsification chamber (13) and arranged downstream of the tool set (11, 12) in the radial direction.

12. Apparatus according to claim 11, characterised in that the mixing and conveying shaft (6) and the rotor (12) (sic) are fastened directly to the motor shaft (5) of an electric motor to which the housing surrounding the emulsification and mixing chamber (13, 8) is flanged.

13. Apparatus according to claim 11 or claim 12, characterised in that the gaps (19) between the axially directed teeth (16) of the stator (12) can be selected between 0.05 and 10 mm.

14. Apparatus according to claim 11, claim 12 or claim 13, characterised in that the speed of the motor is variable.

15. Apparatus according to any one of claims 11 to 14, characterised in that the processed cheese discharge pipe (14) of the mixing and melting apparatus (4) leads, possibly after passing through a flash pasteurisation zone (C), into a vacuum-tight relaxation and creaming vessel (25) to which are connected a vacuum system (26) and a condenser (27) for precipitation of the exhaust vapours sucked out of the vessel, rotatable mixing and creaming tools (28) being provided in the vessel (25) which can be driven at speeds between 5 and 50 rpm.

16. Apparatus according to claim 15, characterised in that the relaxation and creaming vessel (25) has a suction opening for ingredients which are to be mixed in.

17. Apparatus according to claim 15 or claim 16, characterised in that the relaxation and creaming vessel (25) is mounted on weight cells.

18. Apparatus according to claim 15, claim 16 or claim 17, characterised in that the relaxation and creaming vessel (25) has at the bottom a seat valve (37) for continuous pumping off of the fully processed and post-creamed processed cheese.

19. Apparatus according to any one of claims 15 to 18, characterised in that the relaxation and creaming vessel (25) meets the highest hygienic and aseptic requirements in respect of its housing and installations.

## Revendications

1. Procédé de préparation de fromage fondu, dans lequel du fromage brut préfractionné et mélangé avec d'autres ingrédients de recette en une pâte de fromage standardisée, dans laquelle de la vapeur d'eau de qualité d'eau potable est injectée pour son réchauffage, la pâte de fromage étant alors conduite en continu dans une zone de mélange, est ensuite refroidie et alors amenée à un autre traitement, caractérisé par les caractéristiques suivantes :
a) le réchauffage de la pâte s'effectue à 140°C au plus;
b) la quantité de vapeur entrante est calculée de telle sorte que, compte tenu de la pâte de fromage traversant la zone de mélange, le condensat transfère au moins jusqu'à environ 100% de son énergie à la pâte de fromage;
c) dans la zone de mélange, une turbulence élevée est conférée à la pâte de fromage par des outils tournant à grande vitesse;
d) la zone de mélange est suivie d'une zone d'émulsion, dans laquelle la pâte de fromage quittant la zone de mélange est émulsionnée et partiellement mélangée par des outils tournant à grande vitesse;
e) le refroidissement de la pâte de fromage s'effectue sous vide dans une zone de détente et de transformation en crème, dans laquelle la pâte de fromage fondu est transformée en crème par des outils tournant lentement.

2. Procédé selon la revendication 1, caractérisé en ce qu'une région de maintien à température et de réaction (20) suit la préparation de la pâte de fromage.

3. Procédé selon la revendication 1 ou 2, caractérisé en ce que dans une zone de réchauffage intense (C) suivant la zone d'émulsion (B), de la vapeur d'eau de qualité d'eau potable est injectée dans une plage de surpression dans le fromage fondu fluide, et la pâte de fromage fondu est chauffée jusqu'à 150°C.

4. Procédé selon la revendication 3, caractérisé en ce que le chauffage s'effectue à une pression de vapeur pouvant atteindre 8 bars.

5. Procédé selon la revendication 3 ou 4, caractérisé par des mesures de création de turbulences dans la zone de chauffage intense (C).

6. Procédé selon la revendication 3, 4 ou 5, caractérisé par une région de maintien à température à la suite de la zone de chauffage intense (24).

7. Procédé selon l'une des revendications précédentes, caractérisé en ce que dans la zone de détente et de transformation en crème (D), la température du fromage fondu est abaissée en un temps de l'ordre de secondes à une température de produit ou de transformation en crème d'environ 80°C, par un vide défini, maintenu constant au moyen d'une régulation.

8. Procédé selon l'une des revendications 3 à 7, caractérisé en ce que dans la zone de détente et de transformation en crème (D), la hauteur du vide est dimensionnée de manière à ce qu'il vaporise pratiquement toute la quantité d'eau qui a été introduite précédemment sous forme de vapeur dans la zone de chauffage intense.

9. Procédé selon la revendication 8, caractérisé en ce que les buées sont aspirées et condensées à l'aide de l'installation de vide.

10. Procédé selon l'une des revendications précédentes, caractérisé en ce qu'avant et/ou pendant la transformation en crème, des additifs stérilisés sont aspirés ou pompés et ensuite mélangés dans la pâte de fromage fondu.

11. Dispositif pour la préparation d'aliments pompables, en particulier de fromage fondu, en particulier pour exécuter le procédé selon l'une des revendications précédentes, comportant un dispositif de préparation du fromage brut, un mélangeur (1), une installation de chauffage et de refroidissement consécutif de la pâte de fromage, ainsi que des pompes de transport (2, 38) pour la pâte de fromage, caractérisé par une installation de mélange et de fusion (4) fonctionnant en continu, présentant les caractéristiques suivantes :
a) une chambre de mélange (8),
a₁) un arbre de mélange et de transport (6), qui peut être entraîné à des vitesses de rotation d'entre 1000 et 4000 tours/min, pénètre dans la chambre de mélange;
a₂) une entrée (3) pour le mélange de fromage brut est prévue dans le boîtier de la chambre de mélange, en alignement sensiblement axial avec l'arbre (6);
a₃) des gicleurs à vapeur (10) débouchent dans la chambre de mélange (8) ou en avant de celle-ci, sensiblement perpendiculairement à l'arbre (6);
b) une chambre d'émulsion (13),
b₁) elle prolonge l'espace intérieur de la chambre de mélange (8) à son extrémité opposée à l'entrée (3) du mélange de fromage brut;
b₂) elle comprend un jeu d'outils d'homogénéisation et d'émulsion (11, 12);
b₃) ce jeu d'outils est constitué d'un stator (12) disposé en position fixe dans le boîtier de la chambre d'émulsion, et d'un rotor (11) entouré concentriquement et sans contact par le stator, et qui est disposé axialement à la suite de l'arbre de mélange et de transport (6) et tourne ensemble avec celui-ci;
b₄) le stator (12) et le rotor (11) présentent des dents (16) orientées axialement et formant entre elles des fentes axiales (15);
b₅) un tube de sortie de fromage fondu (14) conduisant vers l'extérieur de la chambre d'émulsion (13) suit le jeu d'outils (11, 12) dans la direction radiale.

12. Dispositif selon la revendication 11, caractérisé en ce que l'arbre de mélange et de transport (6) ainsi que le rotor (12) sont fixés directement sur l'arbre moteur (5) d'un moteur électrique, sur lequel le boîtier entourant les chambres d'émulsion et de mélange (13, 8) est fixé par bride.

13. Dispositif selon la revendication 11 ou 12, caractérisé en ce que les interstices (19) entre les dents (16) du stator (12), orientées axialement, peuvent être choisis entre 0,05 et 10 mm.

14. Dispositif selon la revendication 11, 12 ou 13, caractérisé en ce que la vitesse de rotation du moteur peut être modifiée.

15. Dispositif selon l'une des revendications 11 à 14, caractérisé en ce que le tube de sortie de fromage fondu (14) du dispositif de mélange et de fusion (4) conduit, éventuellement après passage dans une zone de chauffage intense (C), dans un récipient de détente et de transformation en crème (25), hermétique au vide, auquel sont raccordés une installation de vide (26) ainsi qu'un condenseur (27) pour condenser les buées aspirées hors du récipient, des outils de mélange tournants et de transformation en crème (28) étant prévus dans le récipient (25), et pouvant être entraînés à des vitesses de rotation d'entre 5 et 50 tours/min.

16. Dispositif selon la revendication 15, caractérisé en ce que le récipient de détente et de transformation en crème (25) présente une ouverture d'aspiration pour des additifs à ajouter au mélange.

17. Dispositif selon la revendication 15 ou 16, caractérisé en ce que le récipient de détente et de transformation en crème (25) est monté sur les cellules de pesage.

18. Dispositif selon la revendication 15, 16 ou 17, caractérisé en ce que le récipient de détente et de transformation en crème (25) présente une vanne (37) du siège de fond, pour pomper en continu du fromage fondu terminé et transformé en crème.

19. Dispositif selon l'une des revendications 15 à 18, caractérisé en ce qu'en ce qui concerne son boîtier et ses accessoires, le récipient de détente et de transformation en crème (25) répond aux exigences d'hygiène et d'asepsie les plus poussées.
